# EUROPEAN PATENT APPLICATION

(11) **EP 4 299 429 A1**
(43) Date of publication of application: **03.01.2024**
(21) Application number: 21927742.3
(22) Date of filing: 26.02.2021
(51) Int. Cl.: B62M 6/65, B60L 50/20

(54) **GEARED MOTOR SYSTEM FOR ELECTRIC BICYCLES**

(71) Applicant: Lancor 2000, S.Coop., 48500 Abanto y Ciervana (ES)
(72) Inventor: RUBIO GAGO, Rubén, 48500 ABANTO Y CIERVANA (BIZKAIA) (ES); ANTUNEZ BORRERO, Eustasio, 48500 ABANTO Y CIERVANA (BIZKAIA) (ES); FLORES COMPAINS, Mikel Aitor, 20018 SAN SEBASTIAN (GIPUZKOA) (ES); JUSTO PEREIRA, Xabier, 20018 SAN SEBASTIAN (GIPUZKOA) (ES)
(74) Representative: Cabinet Beau de Loménie
(86) International application number: PCT/ES2021/070142
(87) International publication number: WO 2022/180284

(57) **Abstract**

The invention relates to a geared motor system for electric bicycles, whereby both the rotor (7.2) of the corresponding motor (7) and the input (3.5) and output (3.4) carriers of the gearbox (3) have two coaxial and concentric shafts (13 and 14) passing therethrough, the shaft (14) of which is hollow and has the shaft (13), which is a standard bicycle wheel hub axle, passing therethrough. The two shafts (13 and 14) are stationary and pass through the moving housing (2) of the geared motor (1), which is preferably the actual hub of the bicycle wheel.

## Description

### Technical field

The present invention relates to the industry of bicycles and more specifically of electric sports, road, or mountain bicycles, and proposes a geared motor system intended to be fixed to the hub of one of the wheels of the bicycle and, preferably, to the hub of the rear wheel, transmitting power directly to the wheel.

### State of the art

Geared motor systems for application in bicycles, systems based on the use of a cycloidal geared motor and within cycloidal geared motors are known today, specifically there are already solutions which describe the use of the so-called epitrochoid geared motors, for the movement of vehicles and even bicycles.

European Patent EP3079934 describes a motor with an epitrochoid reduction, but mainly applicable to a patient lift or a transportation cart.

Russian patent number RU2665017 relates to a drive wheel with an epitrochoid gearbox, said wheel being applicable to wheelbarrow-type vehicles for transporting goods.

PCT number WO2011131725 describes the application of an epitrochoid geared motor applicable to an electric bicycle which is arranged in relation to the bottom bracket of the bicycle.

United Kingdom patent number GB2357329 filed in the year 1999 already described an epitrochoid geared motor applicable to a bicycle wheel.

This solution which can be considered the closest to the present invention has several drawbacks, among which, the followings stand out:
- The entire system is not assembled on the standard hub axle of a bicycle wheel, but requires a special axle, which significantly reduces the versatility of application of the system, adds weight, and takes up space.
- This special axle takes up a considerable amount of space and prevents the system electronics from being integrated in the geared motor.

In view of these drawbacks and limitations of the solutions existing today, a solution which allows solving them is needed, and this is the object of the present invention.

### Object of the invention

To achieve this objective and solve the mentioned technical problems, in addition to providing additional advantages that will be described below, the present invention provides an epitrochoid geared motor system, intended to be assembled in the axle of one of the wheels of the bicycle, preferably in the rear wheel.

According to the invention, the geared motor has a bushing-like hollow through shaft, with the standard wheel axle passing through the inside thereof.

Both the hollow shaft, and the standard bicycle axle, are static through shafts.

The static part of the geared motor is coupled to the stationary hollow through shaft and the movement of the rotor will be transmitted, by means of the gearbox, to a moving housing of the geared motor, which will be moved by means of a mechanical clutch system with respect to the wheel.

According to a preferred embodiment, the mentioned moving housing is the actual hub of the bicycle wheel.

Since the geared motor system is attached to the bicycle wheel hub, it can transmit power directly to the wheel.

In addition to the mechanical elements, the system will have control electronics for the motor and precise means such as a vector control system and Hall effect speed sensors.

With this particular structure of the geared motor, the size thereof can be significantly reduced with respect to other known solutions and this translates into the possibility of incorporating control electronics inside the moving housing of the geared motor.

Moreover, and since the system features a double stationary through shaft, of which the inner shaft is the standard bicycle wheel hub axle, the system can be assembled in any existing bicycle and in any wheel, by passing the standard stationary hub axle thereof through the inside of the hollow shaft which is also a stationary through shaft.

### Description of the figures

Figure 1 shows a schematic view of an epitrochoid geared motor, according to a conventional solution already included in the state of the art.
Figure 2 shows a schematic view such as the one of Figure 1, but now according to the object of the present invention.
Figure 3 is a schematic view showing how the geared motor system includes the corresponding control electronics (8) inside the moving housing (2) of the geared motor.
Figure 4 is a possible practical embodiment variant of the solution of Figure 2.

### Detailed description of the invention

The object of the present invention is a geared motor system for all types of electric bicycles.

Geared motor systems which are based on the use of a cycloidal reduction mechanism are already known and it is even known that said cycloidal reduction mechanism is of the epitrochoid type, which is the one used in the present invention.

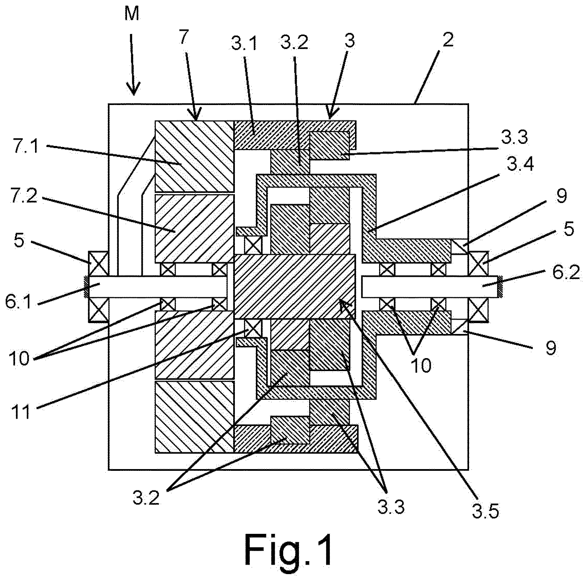

Figure 1 corresponds to a schematic view of a conventional geared motor system which is already part of the state of the art.

As can be seen in said Figure 1, conventional geared motors (M) consist of the corresponding motor (7) formed by a rotor (7.2) and a stator (7.1). The stator (7.1) is integral with a segment of a stationary shaft (6.1).

A moving input carrier (3.5) is arranged integral with the rotor (7.2). The movement of the moving input carrier (3.5) is transmitted, by means of cams, to the cycloidal disks (3.2 and 3.3) assembled therein rolling on pins located in the outer stationary wheel (3.1) which is integral with the stator (7.1) and therefore stationary. The already reduced output movement is transmitted to an output carrier (3.4) rotationally attached to the cycloidal disks (3.2 and 3.3).

The movement of the output carrier (3.4) is transmitted, through a clutch (9), to the outer housing (2) so that it rotates and with it the corresponding hub of the respective wheel which is not depicted.

The moving housing (2) rotates, through the corresponding bearings (5), with respect to a shaft which, as a general rule and to enable obtaining greater reductions in a contained space, is split into two longitudinally aligned segments identified in said Figure 1 with reference numbers (6.1 and 6.2). The two segments (6.1 and 6.2) are stationary and may be part of a single shaft, but this shaft can never be the standard bicycle wheel hub axle. The rest of the bearings, identified with reference number (10), for the rotor (7.2) and for the output carrier (3.4), are also assembled in these segments (6.1 and 6.2).

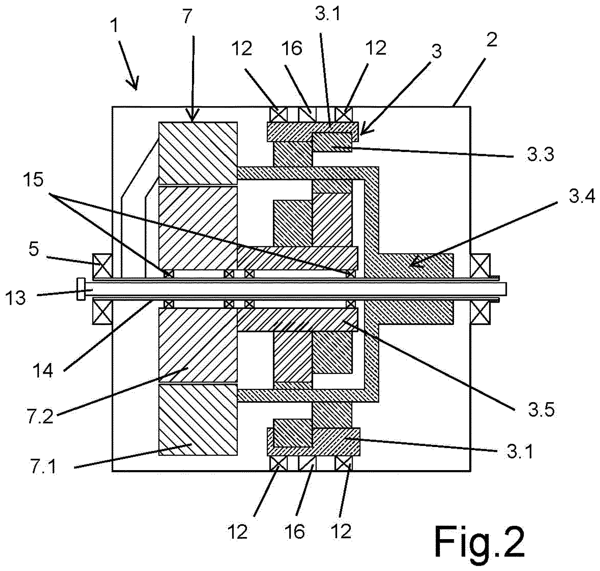

In contrast to this conventional embodiment and according to the present invention, as shown in Figure 2, the geared motor (1) also consists of the corresponding motor (7) formed by a rotor (7.2) and a stationary stator (7.1).

A moving input carrier (3.5) is arranged integral with the rotor (7.2). The movement of the moving input carrier (3.5) is transmitted, by means of cams, to the cycloidal disks (3.2 and 3.3) assembled therein.

In other words, the input to the gearbox occurs in the same manner as in the conventional assembly, through the movable input carrier (3.5), transmitting the movement to the cycloidal disks (3.2 and 3.3) in the same manner as in the conventional solution, but now, these cycloidal disks (3.2 and 3.3) roll at the inner attachment with the output carrier (3.4) which in this case is stationary and attached to the static hub of a corresponding bicycle wheel.

According to this embodiment, the cycloidal disks (3.2 and 3.3) transmit movement to the pinwheel (3.1) which is now movable, converting this element into the output shaft, which is linked, by means of a mechanical clutch system (16), to the moving housing (2). The reduction provided by this configuration is greater than that generated conventionally.

According to a preferred embodiment, the moving housing (2) is the actual hub of the bicycle wheel to which the corresponding wheel spokes are attached. However, an embodiment in which the moving housing (2) is a part integrally attached to the wheel hub would fall within the object of the present invention.

The moving housing (2) rotates with respect to a bushing-like, stationary, hollow through shaft identified with reference number (14). As shown in Figure 2, as a matter of fact, the stator (7.1) is integral with this stationary hollow through shaft (14).

Respective bearings (15) are assembled in this stationary hollow through shaft (14) to allow the rotation of the rotor (7.2) and that of the input carrier (3.5).

A standard bicycle hub axle, identified with reference number (13), which is also a stationary static through shaft, passes through the inside of this stationary hollow through shaft (14).

The shaft (13) being a standard shaft allows assembling a standard hub and this provides a great advantage, since it allows the use of a standard fastening element, being able to use this technology on a standard bicycle. This would allow exchanging a non-driven or non-motorized wheel for a driven or motorized wheel.

Furthermore and taking into account that the standard shafts (13) of bicycle wheel hubs can have different longitudinal dimensions, with this solution, the shaft (13) having different measurements is sufficient for allowing the system to be adapted to all existing bicycles.

Furthermore, the system results in greater overall rigidity by having two stationary through shafts (13 and 14) that are continuous from side to side.

It should be noted that in the conventional solution depicted in Figure 1, the pinwheel (3) does have a translational support but not a rotational support; whereas with the solution object of the invention depicted in Figure 2, now the pinwheel (3) has, in addition to a translational support, a rotational support on the shaft (14), thereby preventing the pinwheel (3) from twisting and thus increasing the internal rigidity of the gearbox.

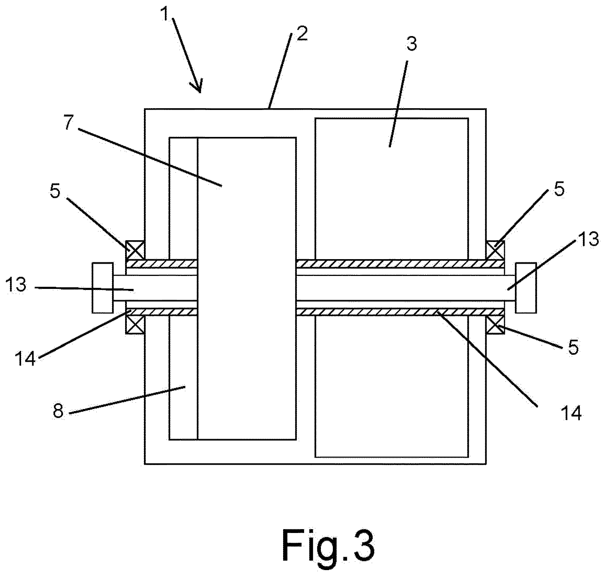

Moreover, with this solution the size of the geared motor (1) can be reduced and since it does not need its own shaft, but uses the standard shaft (13) of a bicycle wheel hub, this furthermore allows introducing in the moving housing (2) all the electronics (8) necessary to operate the system, including motor control electronics and precise means such as a vector control system and Hall effect speed sensors. All these electronics are thus arranged inside the moving housing (2) itself, as schematically depicted in Figure 3, and accordingly the electronics necessary to operate the system are arranged inside the bicycle wheel hub.

According to the foregoing, the system object of this invention provides the following advantages:
- It reduces the size of the geared motor, improving packaging.
- It allows introducing all the electronics necessary for operating the system inside the wheel and specifically inside the wheel hub.
- It increases the internal rigidity of the static components as they are supported at both ends.
- It provides rotational support that prevents the pinwheel (3.1) from twisting.
- It improves component concentricity and torsional stiffness.
- And as a main advantage, the entire system is assembled in a standard through shaft (13), which implies an immediate adaptation to all types of bicycles and wheels, allowing a non-driven or non-motorized wheel to be exchanged for another driven or motorized wheel, and preventing the need to assemble a central shaft that took up a lot of space.

Preferably, this system is designed to be assembled in the rear wheel hub, but this is not limiting as it can be assembled in the front wheel of a bicycle.

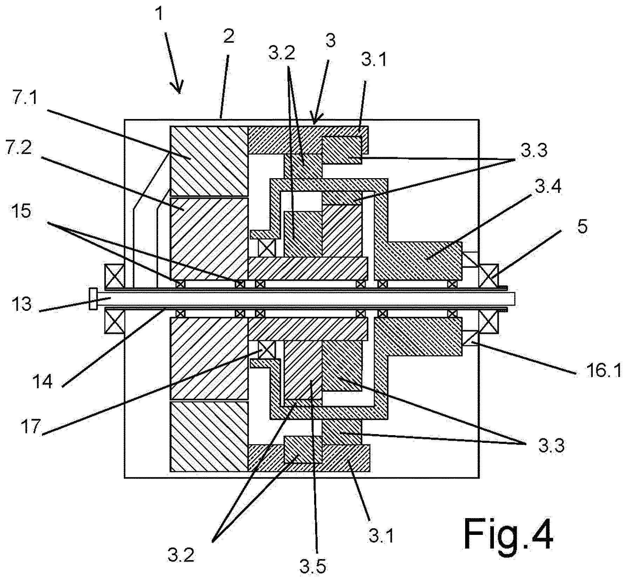

Figure 4 depicts a practical embodiment variant of this system which does not alter its essentiality.

In this case, the input to the gearbox (3) takes place in the same way, through the moving input carrier (3.5) which rotates with the rotor (7.2) also transmitting the movement to the cycloidal disks (3.2 and 3.3), but in this case the pinwheel (3.1) is static, being attached to the stator (7.1); whereas now the output carrier (3.4) is movable, incorporating a bearing (17) between it and the input carrier (3.5).

In this case, the output carrier (3.4) becomes the output shaft and is attached by means of a mechanical clutch system (16.1) to the moving housing (2).

Again with this solution the essence of the invention is fulfilled, in that the geared motor has two stationary through shafts (13 and 14), with shaft (13) being a standard wheel hub axle and shaft (14) being a hollow bushing, through the inside of which the standard shaft (13) passes.

## Claims

1. A geared motor system for electric bicycles, consisting of the corresponding motor (7) and of a cycloidal gearbox (3), with a moving input carrier (3.5) attached to the rotor (7.2) of the motor (7), an output carrier (3.4), and a moving housing (2), **characterized in that** both the rotor (7.2) and the input carrier (3.5) and output carrier (3.4) of the gearbox (3) have two coaxial and concentric shafts (13 and 14) passing therethrough, the shaft (14) of which is hollow and has the shaft (13), which is a standard bicycle wheel hub axle, passing therethrough; and **in that** the two shafts (13 and 14) are stationary and pass through the moving housing (2) of the geared motor (1) which is preferably the actual hub of the bicycle wheel.

2. The geared motor system for electric bicycles according to the preceding claim, **characterized in that** the output carrier (3.4) of the gearbox (3) is stationary and the pinwheel (3.1) of the gearbox (3) is movable and transmits the movement thereof to the moving housing (2) through a clutch (16).

3. The geared motor system for electric bicycles according to claim 1, **characterized in that** the output carrier (3.4) of the gearbox (3) is movable and the pinwheel (3.1) of the gearbox (3) is stationary and the output carrier (3.4) transmits the movement thereof to the moving housing (2) through a clutch (16.1).

4. The geared motor system for electric bicycles according to claims 1 and 2, **characterized in that**, according to a preferred embodiment, the cycloidal gearbox (3) is of the epitrochoid type.

5. The geared motor system for electric bicycles according to the preceding claims, **characterized in that** all the electronics (8), necessary for operating the system, is included inside the moving housing (2) and therefore inside the hub of the wheel in which the geared motor (1) is assembled.
